# EUROPÄISCHE PATENTSCHRIFT

(11) **EP 2 455 696 B1**
(45) Veröffentlichungstag und Bekanntmachung des Hinweises auf die Patenterteilung: **14.10.2015**
(21) Anmeldenummer: 11009012.3
(22) Anmeldetag: 12.11.2011
(51) Int. Cl.: F28D 20/00

(54) **Schichtenspeicher**
Stratified storage
Accumulateur stratifié

(30) Priorität: 22.11.2010 AT 19272010
(43) Veröffentlichungstag der Anmeldung: 23.05.2012
(73) Patentinhaber: Vaillant GmbH, 42859 Remscheid (DE)
(72) Erfinder: Luka, Jürgen, 58453 Witten (DE); Kämpchen, Marian, 42699 Solingen (DE)
(74) Vertreter: Hocker, Thomas

(56) Entgegenhaltungen:
- US-A- 4 027 821

## Beschreibung

Die Erfindung betrifft einen Schichtenspeicher zum Speichern von heißem Wasser für Heizzwecke und zur Brauchwasserversorgung.

Ein solcher Schichten speicher gemäß dem Oberbegriff des Anspruchs 1 ist aus der Patentschrift US 4,027, 821 bekannt.

Schichtenspeicher nutzen die Dichteunterschiede unterschiedlich warmen Wassers aus, so dass warmes Wasser im oberen Bereich und kaltes Wasser im unteren Bereich des Schichtenspeichers gespeichert wird und sind beispielsweise aus der Patentschrift US 4,598,694 bekannt. Der Vorteil des Schichtenspeichers besteht darin, dass sowohl beim Einspeisen wie auch bei der Entnahme von warmem Wasser dies in der jeweiligen Temperatur entsprechenden Bereichen erfolgen kann. Die Beheizung des Schichtenspeichers durch einen externen Brenner erfolgt dadurch, dass das unten eingelagerte kalte Wasser entnommen wird, extern aufgeheizt wird und im oberen Bereich wieder eingelagert wird.

Dabei ist es wichtig, dass eine unerwünschte Durchmischung der Schichten verhindert wird. Einerseits erfolgt dies dadurch, dass das Einspeisen und Entnehmen von Wasser möglichst verwirbelungsfrei erfolgt. Andererseits können eine oder mehrere horizontale Barrieren einzelne Speicherschichten bilden und so eine Durchmischung behindern. So schlägt die Patentschrift US 4,598,694 vor, in einem Schichtenspeicher zwei Trennbleche vorzusehen, die den Speicher in drei Speicherschichten teilen. Zum Austausch des Wassers im Schichtenspeicher ist der an der Wandung des Schichtenspeichers angrenzenden Außenrand der Trennbleche gekerbt, so dass dort Durchlässe gebildet werden. Zusätzlich weisen die Trennbleche in der Mitte ein Siebgitter auf.

Die Patentanmeldung FR 2 902 863 A1 zeigt einen Schichtenspeicher, in dem horizontale und jeweils seitlich abwechselnd versetzt angeordnete Trennbleche eine Konvektion behindern.

Es hat sich jedoch gezeigt, dass die Schichtenspeicher mit horizontalen Barrieren nach dem Stand der Technik zwar geeignet sind, den Schichtenspeicher in einzelne Temperaturbereiche unterteilen und einen ungewollten Austausch der Speicherschichten vermindern. Dennoch können sich insbesondere im winterlichen Heizbetrieb, wenn einerseits dem Schichtenspeicher kontinuierlich warmes Wasser für die Heizung entnommen wird und zugleich das Wasser im Schichtenspeicher durch einen externen Brenner aufgeheizt wird, innerhalb des Schichtenspeichers Verwirbelungen ausbilden, die die Schichtung im Schichtenspeicher negativ beeinflussen. Gerade hier wirken sich die relativ kleinen Öffnungen in den Trennblechen negativ aus, da diese relativ hohe Strömungsgeschwindigkeiten verursachen. Damit ergibt sich ein Zielkonflikt, da Trennbleche mit kleinen Öffnungen einerseits für eine gute Trennung der Speicherschichten sorgen wenn das Wasser nicht umgewälzt wird, andererseits aber Verwirbelungen bei umgewälztem Wasser verursachen. Andererseits können bei großen Öffnungen in den Trennblechen Verwirbelungen, die sich durch das einströmende Wasser ergeben, auch auf benachbarte Speicherschichten auswirken.

Es ist daher Aufgabe der Erfindung, einen Schichtenspeicher mit Trennblechen bereitzustellen, der sowohl bei ruhendem wie auch bei umgewälztem Wasser eine gute Trennung der Speicherschichten bewirkt.

Diese Aufgabe wird gemäß den Merkmalen des Anspruchs 1 dadurch gelöst, dass die Trennmittel aus jeweils zwei Flächenelementen, beispielsweise zwei Trennblechen gebildet werden, die in geringem vertikalen Abstand versetzt angeordnet sind. Dadurch wird einerseits verhindert, dass sich Verwirbelungen innerhalb einer Speicherschicht auf die benachbarte Speicherschicht auswirken. Dies wird dadurch erreicht, dass durch den Versatz der Spalt zwischen den Flächenelementen von dem Wasser mäanderförmig durchströmt werden muss. Darüber hinaus weist der Spalt einen hohen Strömungswiderstand auf. Andererseits ist die Querschnittsfläche des Spaltes hinreichend groß, um beim Nachströmen des Wassers von einer Speicherschicht zur benachbarten Speicherschicht sehr geringe Strömungsgeschwindigkeiten zu erreichen. Somit wird beim Nachströmen eine laminare Strömung mit geringer Strömungsgeschwindigkeit erzielt, die zum Erhalt der Temperaturschichtung im Schichtenspeicher beiträgt.

Der Abstand zwischen den Flächenelementen eines Trennmittels ist dabei sehr gering. In einer bevorzugten Ausführungsform ist der Abstand geringer als 10 % der Innenhöhe des Speicherbehälters, in einer besonders bevorzugten Ausführungsform geringer als 5 %.

In einer Weiterbildung überlappen sich die versetzt angeordneten Flächenelemente, so dass die mäanderförmige Durchströmung und der hohe Strömungswiderstand besonders vorteilhaft ausgeprägt sind.

In einer vorteilhaften Weise ist das Maß, um das sich die Flächenelemente überlappen, größer als der Abstand der Flächenelemente voneinander.

Gemäß der Erfindung sind die Flächenelemente so geformt und angeordnet, dass ein ringförmiges, mit der Wand des Speicherbehälters verbundenes Flächenelement mit einem das durch das ringförmige Flächenelement gebildete Loch abzudeckenden Flächenelement zusammenwirkt.

Gemäß der Erfindung sind die Flächenelemente so dimensioniert, dass die Querschnittsfläche des Loches des ringförmigen Flächenelementes mindestens 70 % der horizontalen Querschnittsfläche des Speicherbehälters in diesen Bereich beträgt.

In einer Ausführungsvariante weist der Speicherbehälter einen runden Querschnitt auf, wobei das Loch und das das Loch abdeckende Flächenelement ebenfalls rund und konzentrisch zum Speicherbehälter angeordnet sind.

Die Erfindung wird nun anhand der Figur detailliert erläutert.

Es stellt dar:

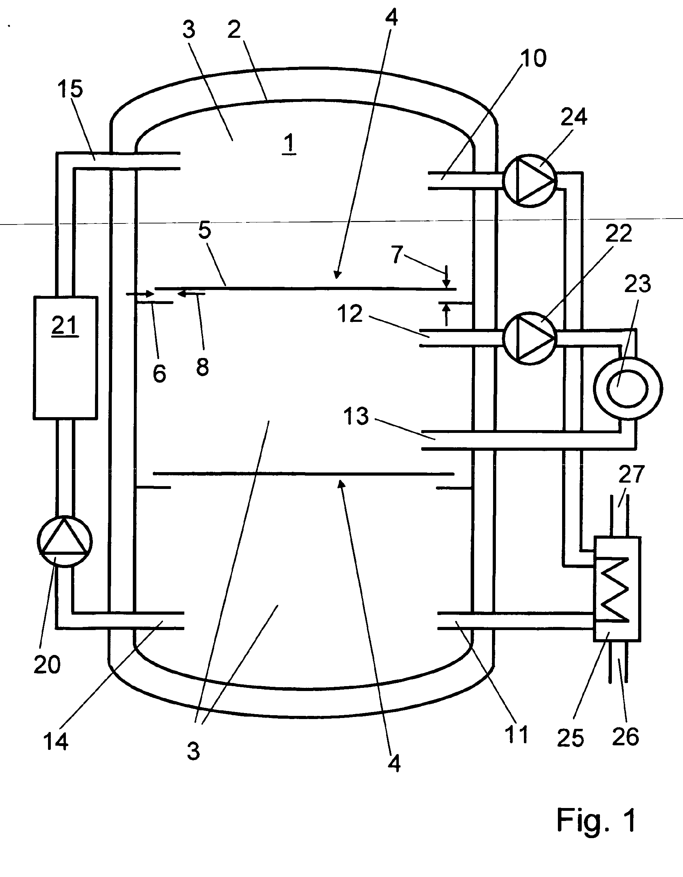

- Figur 1:: Einen erfindungsgemäßen Schichtenspeicher

Figur 1 zeigt einen erfindungsgemäßen Schichtenspeicher 1. Der Schichtenspeicher 1 weist einen Speicherbehälter 2 auf, in dem warmes Wasser in der Weise geschichtet eingelagert ist, dass sich das heiße Wasser oben und das kühlere Wasser unten befindet. In dem Schichtenspeicher 1 sind zwei durchlässige Trennmittel 4 vorgesehen, die den Speicherbehälter 2 in drei Speicherschichten 3 aufteilen. Der Speicherbehälter 2 wird von einer Wärmequelle 21 beheizt. Dazu fördert eine Pumpe 20 das kalte Wasser im unteren Bereich des Schichtenspeichers 1 über den Wasseranschluss 14 durch die Wärmequelle, erwärmt es dort und fördert es anschließend durch den Wasseranschluss 15 in den oberen heißen Bereich des Schichtenspeichers 1. Als Wärmequelle kann ein Brenner und/oder ein Solarkollektor und/oder die Abwärme eines Blockheizkraftwerkes Verwendung finden. Im Falle mehrerer Wärmequellen sind entsprechend mehrere Wasseranschlüsse 14 und 15 vorgesehen, die auch in unterschiedlichen Speicherschichten 3 des Schichtenspeichers 1 münden können.

Weiterhin sind mit dem Schichtenspeicher 1 mehrere Wärmesenken verbunden. Dies ist eine Heizung 23, die über die Wasseranschlüsse 12 und 13 und einer Pumpe 22 mit dem mittleren Speicherbereich 3 des Schichtenspeichers 1 verbunden ist. Ferner ist dies ein Trinkwasserwärmetauscher 27, der über die Wasseranschlüsse 10 und 11 und einer Pumpe 24 mit dem oberen und unteren Bereich des Schichtenspeichers verbunden ist und über den Frischwasserzulauf 26 zuströmendes und über die Trinkwasserleitung 27 abströmendes Wasser erwärmt.

Im winterlichen Heizbetrieb wird dem Schichtenspeicher 1 über den Wasseranschluss des Heizungsvorlaufs 12 in mittleren Speicherbereich warmes Wasser entnommen und über den Wasseranschluss des Heizungsrücklaufs 13 zurück gespeist. Die Wasseranschlüsse 12 und 13 münden jeweils in der Nähe eines Trennmittels 4 in den Schichtenspeicher 1.

Aufgrund des ein- und ausströmenden Wassers bilden sich in dem Bereich der Wasseranschlüsse Strömungen und Verwirbelungen, die zu einer Durchmischung der thermisch abgestuften Speicherschichten führen können. Dies wird durch das Trennmittel 4 verhindert. Das Trennmittel 4 wird durch eine ringförmige, horizontal in dem Speicherbehälter 2 eingebrachte Lochplatte 6 sowie durch eine das Loch der Lochplatte 6 überdeckende Platte 5 gebildet. Die Lochplatte 6 ist mit der Wand des Speicherbehälters 2 verbunden. Die Platte 5 befindet sich in einem geringen Abstand 7 ober- oder unterhalb der Lochplatte 6. Bevorzugt sind der Speicherbehälter 2, die Lochplatte 6 und die Platte 5 rund und konzentrisch angeordnet. Es sind jedoch erfindungsgemäß auch andere Querschnitte möglich. Erfindungsgemäß können auch mehr als zwei Flächenelemente eingesetzt werden, beispielsweise kann eine weitere Lochplatte oberhalb der Platte 5 vorgesehen sein. Dadurch wird der die Durchmischung verhindernde Effekt verstärkt. Der Durchmesser der Platte 5 ist etwas größer als der Durchmesser des Loches der Lochplatte 6. Dadurch überlappen sich die Platte 5 und die Lochplatte 6 um das Überlappungsmaß 8. Bevorzugt ist das Überlappungsmaß 8 größer als der Abstand 7, so dass sich zwischen Platte 5 und Lochplatte 6 ein schmaler Spalt ausbildet. Durch diesen Spalt wird verhindert, dass sich Strömungen oder Verwirbelungen, die durch das ein- oder auslaufende Wasser gebildet werden, auf einen benachbarten Speicherbereich auswirken.

In Betrieb wird das im Schichtenspeicher 1 enthaltene Wasser zyklisch oder periodisch durch die Wärmequelle 21 aufgeheizt. Dabei wird im unteren Bereich des Schichtenspeichers 1 abgekühltes Wasser entnommen, erwärmt und im oberen Bereich wieder eingelagert. Dabei wird durch das im oberen Bereich des Schichtenspeichers eingelagerte Wasser der Schichtenspeicherinhalt nach unten verdrängt. Durch die sich über einen großen Umfang erstreckenden schmalen Spalte zwischen den Platten 5 und Lochplatten 6 kann das Wasser laminar und mit geringer Strömungsgeschwindigkeit in den jeweils darunter liegenden Speicherbereich 3 unter Vermeidung von Verwirbelungen oder Durchmischungen strömen, so dass die Temperaturschichtung erhalten bleibt.

### Bezugszeichenliste

- 1: Schichtenspeicher
- 2: Speicherbehälter
- 3: Speicherschicht
- 4: Trennmittel
- 5: Erstes Flächenelement (Platte)
- 6: Zweites Flächenelement (Lochplatte)
- 7: Abstand
- 8: Überlappungsmaß
- 10: Wasseranschluss Warmwasserentnahme Trinkwasser
- 11: Wasseranschluss Rücklauf Trinkwasser
- 12: Wasseranschluss Vorlauf Heizung
- 13: Wasseranschluss Rücklauf Heizung
- 14: Wasseranschluss Vorlauf Wärmequelle
- 15: Wasseranschluss Rücklauf Wärmequelle
- 20: Pumpe Wärmequellenkreislauf
- 21: Wärmequelle
- 22: Pumpe Heizungskreislauf
- 23: Heizung
- 24: Pumpe Trinkwasserwärmetauscher
- 25: Trinkwasserwärmetauscher
- 26: Frischwasserzulauf
- 27: Trinkwasserleitung

## Patentansprüche

1. Schichtenspeicher (1) mit einem Speicherbehälter(2), der mehrere Wasseranschlüsse (10, 11, 12, 13 ,14, 15) aufweist, mit einem oder mehreren horizontalen Trennmitteln (4), die den Wasserspeicherbehälter in mehrere Speicherbereiche (3) unterteilen, wobei ein Trennmittel (4) aus zumindest zwei in jeweils geringem vertikalen Abstand (7) versetzt zueinander angeordneten Flächenelementen (5, 6) gebildet wird, wobei die Flächenelemente aus mindestens einer Platte (5) und mindestens einer an die Wand des Wasserspeicherbehälters angrenzenden Lochplatte (6) gebildet werden und die Platte (5) so angeordnet ist, dass das Loch der Lochplatte (6) zumindest teilweise überdeckt wird, **dadurch gekennzeichnet, dass** die Querschnittsfläche des Loches mindestens 70 % der horizontalen Querschnittsfläche des Wasserbehälters im Bereich der Lochplatte (6) beträgt.

2. Schichtenspeicher nach Anspruch 1, **dadurch gekennzeichnet, dass** der Abstand (7) weniger als 10 % der Innenhöhe des Speicherbehälters (2) beträgt.

3. Schichtenspeicher nach Anspruch 1, **dadurch gekennzeichnet, dass** der Abstand (7) weniger als 5 % der Innenhöhe des Speicherbehälters (2) beträgt.

4. Schichtenspeicher nach einem der vorhergehenden Ansprüche, **dadurch gekennzeichnet, dass** sich die Flächenelemente (5, 6) zumindest teilweise um ein horizontales Überlappungsmaß (8) überlappen.

5. Schichtenspeicher nach Anspruch 4, **dadurch gekennzeichnet, dass das** Überlappungsmaß (8) größer ist als der Abstand (7).

6. Schichtenspeicher nach einem der vorhergehenden Ansprüche, **dadurch gekennzeichnet, dass** der Wasserbehälter (2) horizontal einen runden Querschnitt aufweist und dass das Loch der Lochplatte (6) und die Platte (5) jeweils rund sind und koaxial zum Wasserbehälter (2) ausgerichtet sind.

## Claims

1. Stratified storage device (1) having a storage tank (2) which has several water connections (10, 11, 12, 13, 14, 15), having one or more horizontal separating means (4) which divide the water storage tank into several storage areas (3), wherein a separating means (4) is formed from at least two surface elements (5, 6) which are each arranged to be displaced with respect to each other at a short vertical distance (7), wherein the surface elements are formed from at least one plate (5) and at least one perforated plate (6) which is adjacent to the wall of the water storage tank, and the plate (5) is arranged in such a way that the hole of the perforated plate (6) is covered at least partially, **characterised in that** the cross-sectional surface of the hole amounts to at least 70% of the horizontal cross-sectional surface of the water tank in the region of the perforated plate (6).

2. Stratified storage device according to claim 1, **characterised in that** the distance (7) amounts to less than 10% of the interior height of the storage tank (2).

3. Stratified storage device according to claim 1, **characterised in that** the distance (7) amounts to less than 5% of the interior height of the storage tank (2).

4. Stratified storage device according to one of the preceding claims, **characterised in that** the surface elements (5, 6) overlap at least partially by a horizontal degree of overlap (8).

5. Stratified storage device according to claim 4, **characterised in that** the degree of overlap (8) is larger than the distance (7).

6. Stratified storage device according to one of the preceding claims, **characterised in that** the water tank (2) has a round cross-section horizontally and that the hole of the perforated plate (6) and the plate (5) are each round and are aligned coaxially to the water tank (2).

## Revendications

1. Accumulateur à stratification (1) doté d'un réservoir de stockage (2), qui comporte plusieurs raccordements en eau (10, 11, 12, 13, 14, 15), avec un ou plusieurs moyens de séparation horizontaux (4), lesquels séparent les réservoirs de stockage d'eau en plusieurs compartiments de stockage (3), un moyen de séparation (4) étant formé au moins de deux éléments de surface (5, 6) décalés l'un par rapport à l'autre dans un faible écartement (7) vertical, les éléments de surface étant formés au moins d'une plaque (5) et au moins d'une plaque perforée (6) adjacente à la paroi du réservoir de stockage, la plaque (5) étant disposée de sorte que le trou de la plaque perforée (6) est couvert au moins en partie, **caractérisé en ce que** la superficie de la section du trou s'élève au moins à 70 % de la superficie de la section horizontale du réservoir de stockage d'eau dans la zone de la plaque perforée (6).

2. Accumulateur à stratification selon la revendication 1, **caractérisé en ce que** l'écartement (7) s'élève à moins de 10 % de la hauteur interne du réservoir de stockage (2).

3. Accumulateur à stratification selon la revendication 1, **caractérisé en ce que** l'écartement (7) s'élève à moins de 5 % de la hauteur interne du réservoir de stockage (2).

4. Accumulateur à stratification selon l'une quelconque des revendications précédentes, **caractérisé en ce que** les éléments de surface (5, 6) chevauchent au moins en partie la dimension de chevauchement (8) horizontale.

5. Accumulateur à stratification selon la revendication 4, **caractérisé en ce que** la dimension de chevauchement (8) est supérieure à l'écartement (7).

6. Accumulateur à stratification selon l'une quelconque des revendications précédentes, **caractérisé en ce que** le réservoir de stockage d'eau (2) comporte horizontalement une section arrondie et **en ce que** le trou de la plaque perforée (6) et la plaque (5) sont tous les deux ronds et sont alignés de façon coaxiale par rapport au réservoir de stockage d'eau (2).
